# EUROPÄISCHE PATENTSCHRIFT

(11) **EP 2 691 823 B1**
(45) Veröffentlichungstag und Bekanntmachung des Hinweises auf die Patenterteilung: **16.11.2016**
(21) Anmeldenummer: 12718577.5
(22) Anmeldetag: 22.03.2012
(51) Int. Cl.: G05B 19/401, B21B 38/12

(54) **VERFAHREN ZUR VERMESSUNG EINER WELLE**
METHOD FOR MEASURING A WAVE
PROCÉDÉ DE MESURAGE D'UN ARBRE

(30) Priorität: 29.03.2011 DE 102011015366
(43) Veröffentlichungstag der Anmeldung: 05.02.2014
(73) Patentinhaber: Kling-Kaiser, Jens, 40668 Meerbusch (DE)
(72) Erfinder: Kling-Kaiser, Jens, 40668 Meerbusch (DE)
(74) Vertreter: Vomberg, Friedhelm
(86) Internationale Anmeldenummer: PCT/DE2012/000303
(87) Internationale Veröffentlichungsnummer: WO 2012/130216

(56) Entgegenhaltungen:
- EP-A2- 1 210 992

## Beschreibung

Die Erfindung betrifft ein Verfahren zur Vermessung einer Welle, wobei ihre Abweichungen hinsichtlich ihrer räumlichen Lage zu einer Werkzeugmaschine, ihrer Exzentrizität zur Drehachse, ihres Durchmessers sowie etwaiger Abweichungen zur Zylinderform, mittels eines längsaxial entlang der Welle geführten Tastgerätes und dessen erfasste Daten festgestellt werden.

Der exakten Vermessung einer Welle, die beispielsweise als Walze in Walzbetrieben eingesetzt werden kann, kommt eine erhebliche Bedeutung zu. Jede Messungenauigkeit während der Fertigung kann bei Walzen eines Walzwerks zu Fehlern in den Walzprodukten führen. Geometrische Abweichungen der Welle vom gewünschten Soll-Zustand führen beim Betrieb der Wellen auch zu erheblichen Belastungen der Lager und schließlich einem erhöhten Verschleiß.

Die sich aus Geometrieabweichungen einer Welle ergebenden Probleme sind zum Teil in der Vergangenheit bereits erkannt worden, jedoch waren die vorgeschlagenen Problemlösungen entweder unzureichend, da nur Teilaspekte berücksichtigt worden sind, oder hinsichtlich der Handhabung sehr aufwendig.

Die DE 1 427 485 C beschreibt eine Einrichtung an einer Walzenschleifmaschine zur Bestimmung der erforderlichen Schleifzugabe für das Schleifen der auf der Maschine gelagerten Walze mit vom vorgegebenen zu schleifenden Profil abweichender Form. Um eine programmgesteuerte Walzenschleifmaschine schaffen zu können, wird vorgeschlagen, dass auf einem quer zur Walzenachse zustellbaren Schlitten mindestens zwei Taster in einem Gehäuse geführt und zur Walze hin vorgespannt sind. Einer der Taster soll bei Berührung der Walze in Folge der Zustellbewegung des Schlittens eine Bezugsstellung einnehmen, von der unter Verschiebung des anderen Tasters längst der Walze jede weitere Zustellung des nun vom erstgenannten Taster gesteuerten Schlittens und damit die maximal Abweichung vom Sollprofil der Walze messbar ist. Voraussetzung für eine exakte Messung ist jedoch die exakte Ausrichtung des Schlittens und die Linearität der Führung für den Schlitten, worüber in diesem Dokument nichts ausgesagt wird. Mit dieser Einrichtung sind nur die Rundheit und der Durchmesser der Walze feststellbar, allerdings fehlt insbesondere eine Kontrolle über die Linearität (Parallelität) der Walze.

In der DE 39 00 491 A1 wird hervorgehoben, dass es bei Messeinrichtungen, mit denen sich der Durchmesser des zu schleifenden Grundkörpers messen lässt, von grundlegender Bedeutung ist, dass der Rundkörper mit zusätzlichen Mess- und Einstellvorrichtungen exakt zur Schleifmaschinenachse ausgerichtet worden ist. Als Hilfsmittel werden Messsonden vorgeschlagen, die in vertikaler und horizontaler Richtung die Lage einer Walze genau bestimmen und ihre Messsignale zur Anzeige bringen, so dass manuell die Lage der Walzen mittels üblicher Stellvorrichtungen wie Spindeln, Keile usw. korrigiert werden kann. Alternativ zur manuellen Ausrichtung können die erhaltenen Messsignale auch einer automatischen Stellvorrichtung zugeführt werden, welche die Lagekorrektur selbsttätig vornimmt. Abgesehen davon, dass mit dieser Messeinrichtung keine Messung der Exzentrizität der Welle möglich ist, müssen, da alle 3 Anlagepunkte verstellbar sind, extreme Datenmengen verarbeitet werden, die eine Echtzeitmessung und Echtzeitdatenverarbeitung ausschließen.

Um mit einer Genauigkeit von < 10 µm sowohl den Walzendurchmesser sowie die Korrekturwerte für die Walzenausrichtung und die Balligkeit ohne zusätzliche Messeinrichtungen für die Lageerfassung messen zu können, wird vorgeschlagen, dass auf einem C-bogenförmigen Messarm drei Messsonden platziert sind, die ihre Messdaten an einen Rechner geben, der nach einem Algorithmus aus den Messwerten den Durchmesser der Walze und die x-y-Korrekturen für die Walzenausrichtung und, falls gefordert, die Balligkeit der Walze ausrechnet und die Sollwerte an den entsprechenden Stellen wieder abgibt. Die Kalibrierung der Messsonden soll mit einer an der Rundschleifmaschine festmontierten runden Eichscheibe, deren Mitte sich auf der Maschinenachse befindet, erreicht werden. Der Nachteil dieser Messeinrichtung besteht darin, dass über die Eichscheibe zwar sichergestellt werden kann, dass der Messarm vertikal zur Längsachse der zu vermessenden und zu bearbeitenden Welle ausgerichtet wird, jedoch bleiben Ungenauigkeiten der längsaxialen Führung des Messarms und der Schleifscheibe gegenüber der Walze unberücksichtigt.

Die EP 1 210 992 A2 beschreibt eine Konturmesseinrichtung zur Messung der Kontur einer an einem Walzgerüst angeordneten Walze mit einer Anzahl von Messköpfen, von denen jeder entlang einer annähernd parallel zur Walzenachse ausgerichteten Längsachse verfahrbar ist. Ferner wird vorgeschlagen, dass der oder jeder Messkopf zur berührungslosen Einhaltung eines vorgebaren Abstandes zur Oberfläche der Walze ausgelegt wird. Die berührungslose Einhaltung des vorgebaren Abstandes zur Oberfläche der Walze soll vorzugsweise durch ein Luftkissen zwischen einem in einem Gehäuse des Messfühlers verschiebbar angeordneten Fühlerfinger und der Oberfläche der Walze bewirkt werden. Entsprechende Ungenauigkeiten ergeben sich auch bei dem Messsystem nach der DE 196 47 604 A1, bei dem ein Messwagen aus einem Rahmen mit zwei oder mehr Rädern oder Laufrollen besteht, der in der Schnittebene der Rollen oder Räder senkrecht zur Bewegungsrichtung und zur Längsrichtung der Walze jeweils eine oder mehrere Wegsensoren hat, die in Richtung des Radiusvektors des rotationssymmetrischen zu vermessenden Körpers ausgerichtet sind. Durch die drei gemessenen Punkte der Wellen kann lediglich ein exakter Kreis im Querschnitt festgestellt bzw. beim Schleifen eingestellt werden.

Die DE 197 53 028 A1 beschreibt einen Messwagen zur Datenerfassung von rotationssymmetrischen Körpern, der aus einem Rahmen besteht, der insgesamt vier Kontaktelemente sowie Sensorelemente besitzt. Jeweils zwei Kontaktelemente und ein Sensorelement sind auf einer vertikal zur Wagenlängsachse angeordneten Achse angeordnet. Zusätzlich ist ein Temperatursensor vorgesehen, der Durchmesseränderungen aufgrund unterschiedlicher Temperaturen berücksichtigt. Mit diesem Messwagen sind Durchmessermessungen der Welle an zwei verschiedenen Orten sowie längsaxiale Wegmessungen beim Verschieben des Messwagens entlang der Längsachse möglich. Auch dieses Messsystem berücksichtigt nur Teilaspekte, nicht jedoch sämtliche möglichen Formfehler einer Welle, wie Welligkeiten in der Oberfläche oder Exzentrizitäten, da lediglich gewährleistet wird, dass die Durchmesser der Wellen entlang der Längsachse gleich groß sind.

Es ist Aufgabe der vorliegenden Erfindung ein Verfahren anzugeben, mit dem alle möglichen Messfehler weitestmöglich ausgeschaltet werden, damit insbesondere bei der Endbearbeitung von Wellen durch Schleifen, Honen oder ähnliche Prozesse eine exakte Zylinderform gewährleistet werden kann.

Diese Aufgabe wird durch das Verfahren zur Vermessung der Welle nach
Anspruch 1 gelöst.

Der Kerngedanke dieses Verfahrens beruht darauf, dass das Tastgerät, das keine separate längsaxiale Tastgerät-Führung besitzt, auf die Welle aufgesetzt und auf Gleitschuhen oder Rollen abgestützt entlang der Welle längsaxial bewegt wird, wobei zunächst die Bahn, entlang der das Tastgerät längsaxial geführt wird, hinsichtlich etwaiger Abweichungen der Linearität und der Parallelität zur Längsachse der zu vermessenden Welle vermessen wird. Die sich hieraus ergebenden Messdaten werden in Abhängigkeit von Raumkoordinaten bzw. als Raumkoordinaten in einem Rechner gespeichert. Durch diese Maßnahme wird gewährleistet, dass unabhängig von der längsaxialen Führung des Tastgerätes stets Messwerte generiert werden können, die in Relation zu einer vorgebbaren Raumachse stehen. Die Raumachse als Bezugslinie ist entweder die über die Walzeneinspannung vorgegebenen Rotationsachse der Welle oder eine Parallele hierzu. Messfehler, die sich dadurch ergeben, dass der Tastwagen nicht exakt parallel zur Rotationsachse geführt wird, also schiefwinklig oder auf einer bogen- oder wellenförmigen Bahn, werden vermieden, da der Rechner entsprechende Korrekturwerte bei den Messungen, die sich aus der fehlenden Linearführung des Tastgerätes ergeben, berücksichtigt. Somit werden gleichzeitig die Walze und die Abweichungen des Maschinenbettes in horizontaler und vertikaler Richtung erfasst. Die Oberflächenkontur der Welle, nämlich deren Durchmesser, deren etwaige Exzentrizität zur Drehachse sowie deren Parallelität, die längsaxiale Linearität der Oberfläche zur Drehachse und der Rundlauf der Walze werden ausschließlich mit Messeinrichtungen erfasst, wie sie beispielsweise in der DE 196 47 604 A1 oder der DE 197 53 028 A1 oder der DE 10 2007 060 661 A1 beschrieben werden, und in Echtzeit gespeichert. Aufgrund dieser Maßnahmen werden Abweichungen des zu vermessenden Körpers sowohl in der Horizontalen (y-Achse), der Parallelität (x-Achse) und Ungleichmäßigkeiten entlang der Längsachse (z-Achse) bei der Durchmesser- und Formmessung sicher festgestellt. Gleichzeitig werden nach einer weiteren Ausgestaltung der Erfindung die x- und die z-Achse des Maschinenbettes vermessen. Beim abschließenden Schleifen, Honen oder sonstigen Endbearbeitungen einer Welle können dann die notwendigen Maßnahmen getroffen werden, beispielsweise kann die Einspannung der Welle an den beiden Enden korrigiert werden, um die Längsachse der Welle mit der maschinenseitig vorgegebenen Drehachse in Kongruenz und bringen. Im Anschluss daran wird jedes durch das Tastgerät erhaltene Messsignal der Raumkoordinaten korrigiert, wenn die Messposition des Tastgerätes von der "Idealbahn" abweicht. Aufgrund dieser Korrekturen ergeben sich eine objektiv fehlerfreie Feststellung der Wellengeometrie und deren Ausrichtung im Raum, insbesondere hinsichtlich der Maschine, in welche die Welle eingespannt ist.

Nach einer bevorzugten Ausführungsform werden zusätzlich die Temperatur der Welle und/oder die Kraft gemessen, mit der das Tastgerät an der Wellenoberfläche während der Messung anliegt. Die Temperaturmessung dient dazu, um Ausdehnungen oder Kontraktionen der Welle infolge von Temperaturschwankungen zu berücksichtigen. Nicht nur die Raumtemperatur, die jahreszeitabhängig in Werkshallen schwanken kann, sondern auch die Temperatur, die sich bei Schleifvorgängen einstellt, kann korrigierend berücksichtigt werden.

Die Messung der Kraft, mit der das Tastgerät an der Wellenoberfläche während der Messung anliegt, liefert Informationen darüber, ob aufgrund der Oberflächenrauigkeit der Welle und/oder etwaiger Vibration Messfehler möglich sind; eine zu geringe Anpresskraft muss gegebenenfalls gesteigert werden, um die Messgenauigkeit zu erhöhen.

Das Messverfahren kann als reines Prüfverfahren verwendet werden, etwa um festzustellen, ob die gelieferten Wellen als Walzen hinreichender Fertigung in ein Walzgerüst eingesetzt werden können. Vorzugsweise wird jedoch das Messverfahren derart verwendet, dass die gewonnenen Messdaten zur Echtzeit-CNC-Steuerung einer Schleifmaschine zur Bearbeitung der Welle verwendet werden. Auf diese Weise ist sichergestellt, dass Formfehler der zu bearbeitenden Wellen sicher erkannt und unmittelbar durch entsprechende Maschinensteuerung beseitigt werden.

Insbesondere können gemessene Raumkoordinaten der Maschinenbettabweichung in drei Dimensionen erfasst werden und als Korrekturgröße der CNC-Steuerung zugeführt werden. Drohende Abweichungen des Ist-Zustandes vom Soll-Zustand können sofort bei der Walzenbearbeitung eliminiert werden.

Weitere Einzelheiten und Vorteile ergeben sich aus den Zeichnungen sowie den folgenden Erläuterungen. Es zeigen:

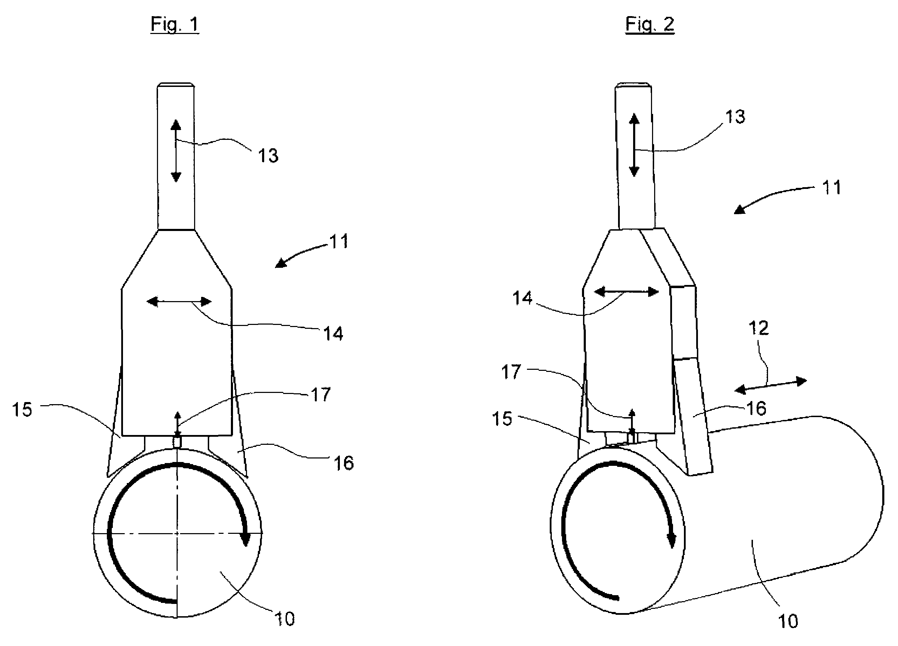

- Fig. 1 und 2: jeweils schematische Ansichten eines Tastgerätes, das auf eine Welle aufgesetzt ist.

Die Darstellungen zeigen ein rotierend bewegtes Werkstück 10 sowie ein Tastgerät 11, das auf das Werkstück 10 aufgesetzt ist und längsaxial in der z-Achse (siehe Doppelpfeil 12 in Fig. 2) geführt werden kann.

Doppelpfeil 13 bezeichnet die y-Achse bzw. Abweichungen der Horizontalen hiervon und Doppelpfeil 14 die x-Achse bzw. Abweichungen in dieser Achsrichtung.

Das Tastgerät 11 besitzt Gleitschuhe 15, 16 oder Rollen. Zusätzlich ist ein federgelagerter Taststift 17 vorgesehen, der als Berührungssensor dient. Die verwendete Anordnung kann im Prinzip derjenigen entsprechend, die in der DE 10 2007 060 661 A1 beschrieben wird.

Zur Durchführung des erfindungsgemäßen Verfahrens wird das Tastgerät in Z-Richtung geführt, wobei es zunächst ausschließlich um die Prüfung der Linearführung des Tastgerätes geht. Bei solchen Tastgeräten, die auf die Welle aufgesetzt und auf Rollen abgestützt entlang der Welle längsaxial bewegt werden, die also keine separate Tastgerät-Führung in Z-Richtung besitzen, kann die Bezuglinie in Z-Richtung dadurch ermittelt werden, dass das Tastgerät jeweils an dem vorderen und dem hinteren Ende aufgesetzt wird und die dortigen Raumkoordinaten exakt in Bezug auf einen Bezugspunkt, der ein feststehender Raumpunkt an beliebiger Stelle sein kann, festgestellt werden. Die Idealführung ergibt sich dann aus der Verbindungslinie der beiden Endpunkte. Hierbei muss jedoch sichergestellt werden, dass diese Gerade entweder parallel zu der Drehachse liegt, die durch die Einspannenden für die Wellen am Maschinenbett festgelegt wird. Bei einer winkligen Anordnung zu dieser vorgegebenen Drehachse sind entsprechende Korrekturwerte im Rechner zu ermitteln.

Bei der anschließenden Vermessung der Welle als rotierendem Werkstück 10 wird das Tastgerät entlang der Z-Richtung längsaxial der Welle geführt, wobei kontinuierlich die Messergebnisse des Taststiftes 17 sowie der Gleitschuhe oder Rollen 15 und 16 als Koordinaten ermittelt werden. Der Taststift sowie die Gleitschuhe oder Rollen 15 und 16 definieren einen Teilkreis, über den sich der komplette Kreis als Querschnittsprofil berechnen lässt. Etwaige Unrundheiten lassen sich aus den Messergebnissen ebenso leicht ermitteln wie Exzentrizitäten, die in jedem Fall zu korrigieren sind.

Durch die gewählte Bezugslinie im Raum können auch fehlerfrei etwaige Abweichungen der Wellenoberfläche infolge von Welligkeiten, Durchbiegungen oder ähnlichem festgestellt werden, die bei einer reinen Durchmessermessung nicht ermittelbar sind. Eine Welle kann nämlich über die gesamte Länge denselben Durchmesser besitzen, aber dennoch gebogen sein oder wellenförmig in der Längsachse ausgebildet sein. Diese längsaxialen Ungenauigkeiten wie auch etwaige Abweichungen in der x- oder y-Achse lassen sich somit leicht feststellen bzw. bei der Fertigbearbeitung eliminieren.

Die gemessenen Daten einschließlich der Korrekturdaten sind in einem Rechner gespeichert, der im Falle einer gewünschten Schleifbearbeitung des rotierenden Werkstückes diese Daten zur CNC-Steuerung der Schleifmaschine bzw. des Schleifwerkzeuges verwertet. Durch das erfindungsgemäße Messverfahren lassen sich hohe Oberflächengenauigkeiten und nahezu fehlerfreie Zylinderformen der Welle schaffen. Gegebenenfalls können auch etwaige Maschinenbettabweichungen als Korrekturgrößen in die CNC-Steuerung eingegeben werden.

## Patentansprüche

1. Verfahren zur Vermessung einer Welle (10), wobei ihre Abweichungen hinsichtlich ihrer räumlichen Lage zu einer Werkzeugmaschine, ihrer Exzentrizität zur Drehachse, ihres Durchmessers sowie etwaiger Abweichungen zur Zylinderform, mittels eines längsaxial entlang der Welle geführten Tastgerätes (11) und dessen erfasste Daten festgestellt werden, **dadurch gekennzeichnet, dass**
- das Tastgerät (11), das keine separate längsaxiale Tastgerät-Führung besitzt, auf die Welle (10) aufgesetzt und auf Gleitschuhen (15, 16) oder Rollen abgestützt entlang der Welle längsaxial bewegt wird,
- zunächst die Bahn, entlang der das Tastgerät (11) längsaxial geführt wird, hinsichtlich etwaiger Abweichungen der Linearität und der Parallelität zur Längsachse der zu vermessenden Welle (10) vermessen wird und die Daten in Abhängigkeit von Raumkoordinaten gespeichert werden und
- anschließend die Oberflächenkontur der Welle (10), nämlich deren Durchmesser, deren etwaige Exzentrizität zur Drehachse sowie deren Parallelität, und die längsaxiale Linearität der Oberfläche zur Drehachse datenmäßig erfasst und in Echtzeit gespeichert werden.

2. Verfahren nach Anspruch 1, **dadurch gekennzeichnet, dass** zusätzlich die Temperatur der Welle (10) und/oder die Kraft gemessen werden, mit der das Tastgerät (11) an der Wellenoberfläche während der Messung anliegt.

3. Verfahren nach Anspruch 1 oder 2, **dadurch gekennzeichnet, dass** die Messdaten zur CNC-Steuerung einer Schleifmaschine in Echtzeit zur Bearbeitung der Welle (10) verwendet werden.

4. Verfahren nach einem der Ansprüche 1 bis 3, **dadurch gekennzeichnet, dass** die gemessenen Raumkoordinaten der Maschinenbettbahnabweichung in drei Dimensionen (X-, Y- und Z-Richtung) erfasst und als Korrektur der CNC-Steuerung bei der Werkstückbearbeitung zugeführt werden.

## Claims

1. Method for measuring a shaft by detecting its deviations in view of its spatial position to a machine tool, its eccentricity to the rotation axis, its diameter and possible deviations from the cylindrical shape, by means of a keying device (11) guided along the longitudinal axis of the shaft, and by detecting the measured data, **characterised in that**
- the keying device (11) having no separate guidance along the longitudinal axis is put on the shaft (10) and being moved along the shaft longitudinal axis , thereby supported by sliding shoes (15, 16) or rolls,
- at first, the path along the longitudinal axis of which the keying device (11) is guided is intended to be measured for any deviations in the linearity and the parallelism relative to the longitudinal axis of the shaft (10) to be measured and the date are intended to be stored on the basis of spatial coordinates and
- subsequent the data of the surface contour of the shaft (10), namely the diameter, any eccentricity in the shaft (10) relative to the axis of rotation and the parallelism of the shaft and the longitudinal axis linearity of the surface relative to the axis of rotation are captured and stored in real-time.

2. Method according to claim 1, **characterised in that** additionally the temperature of the shaft (10) and/or the force with which the keying device (11) is acting on the shaft surface is measured.

3. Method according to claim 1 or 2, **characterised in that** the measuring data for the CNC-control of a guiding machine are used in real-time for the machining of the shaft (10).

4. Method of one of the claims 1 to 3, **characterised in that** the measured spatial coordinates of the machine-bed-path-deviations are detected in three dimensions (X-, Y-, and Z-direction) and are fed as adjustment of the CNC-control for the workpiece-machining.

## Revendications

1. Procédé de mesure d'un arbre (10), dans lequel ses écarts concernant sa position dans l'espace par rapport à une machine-outil, son excentricité par rapport à l'axe de rotation, son diamètre ainsi que des écarts éventuels par rapport à la forme cylindrique sont détectés au moyen d'un appareil de palpage (11) guidé suivant l'axe longitudinal le long de l'arbre (10) et de ses données saisies,
**caractérisé par le fait que**
- ledit appareil de palpage (11) qui ne possède pas de guidage séparé suivant l'axe longitudinal de l'appareil de palpage est posé sur l'arbre (10) et est déplacé, tout en étant appuyé sur des patins de guidage (15, 16) ou rouleaux, suivant l'axe longitudinal le long de l'arbre,
- d'abord, la trajectoire le long de laquelle l'appareil de palpage (11) est guidé suivant l'axe longitudinal est mesurée quant à des écarts éventuels de la linéarité et du parallélisme par rapport à l'axe longitudinal de l'arbre (10) à mesurer, et les données sont mémorisées en fonction de coordonnées spatiales, et,
- ensuite, le contour de surface de l'arbre (10), à savoir son diamètre, son excentricité éventuelle par rapport à l'axe de rotation ainsi que son parallélisme et la linéarité suivant l'axe longitudinal de la surface par rapport à l'axe de rotation sont enregistrés sous forme de données et mémorisés en temps réel.

2. Procédé selon la revendication 1, **caractérisé par le fait que**, en sus, on mesure la température de l'arbre (10) et/ou la force avec laquelle l'appareil de palpage (11) s'applique contre la surface de l'arbre durant la mesure.

3. Procédé selon la revendication 1 ou 2, **caractérisé par le fait que** les données de mesure sont utilisées pour la commande CNC en temps réel d'une machine à rectifier pour l'usinage de l'arbre (10).

4. Procédé selon l'une quelconque des revendications 1 à 3, **caractérisé par le fait que** les coordonnées spatiales mesurées de l'écart de la trajectoire du banc de machine sont détectées en trois dimensions (directions X, Y et Z) et sont fournies en tant que correction à la commande CNC lors de l'usinage de pièce.
